# EUROPEAN PATENT APPLICATION

(11) **EP 2 533 001 A1**
(43) Date of publication of application: **12.12.2012**
(21) Application number: 12004265.0
(22) Date of filing: 05.06.2012
(51) Int. Cl.: F41G 3/02, F41G 3/14, G01S 3/783

(54) **Threat detection systems and methods using image intensifiers and position-sensing photodiodes**

(30) Priority: 07.06.2011 US 201113134419
(71) Applicant: OPTICS 1, INC., Westlake Village, CA 91362 (US)
(72) Inventor: Odhner, Jefferson, E., Amherst, NH 03031 (US)
(74) Representative: Sawodny, Michael-Wolfgang

(57) **Abstract**

The invention comprises a method of detecting a threat from a potassium-based munition in a section of monitored terrain, comprising:
collecting first light originating from a flash from a potassium-based munition using a collection optical system having a field of view;
intensifying the collected first light to form first intensified light;
detecting on a first position-sensing photodiode (PSD) a first intensified light spot formed from the first intensified light and converting the detected first intensified light spot into a first electrical signal; monitoring with a second PSD second light that does not come from the potassium-based munition and that is collected by the collection optical system, and providing a second electrical signal from the second PSD; comparing the first and second electrical signals to determine whether the detected first intensified light spot represents a threat from the potassium-based munition; and locating the threat within the field of view of the collection optical system.

## Description

### CROSS-REFERENCE TO RELATED APPLICATIONS

This application is a continuation-in-part of U.S. Patent Application Serial No. 12/803,539, filed on June 29, 2010, entitled "Threat detection systems and methods using position-sensing photodiodes," which application is incorporated by reference herein.

### FIELD

The present invention relates generally to threat detection systems, and in particular to such systems that can detect the position of the threat based on the thermal flash from the threat.

### BACKGROUND ART

It is desirable to be able to identify and locate a munitions threat in a variety of hostile environments such as a battlefield. Examples of such threats include rifle and machine gun fire, artillery fire (e.g., from rockets and mortars), and various types of explosions.

Current techniques for detecting a munitions-based threat and determining its location include acoustic sensing with microphones or optical imaging with an FPA (focal plane array). Acoustic threat detection systems typically employ triangulation based on sound arrival from two microphones. This method is low cost but also low range, and vehicle noise interference and firecrackers can cause a high false alarm rate. The pointing accuracy also depends on the separation of the microphones, which may not be able to be separated very far from each other. Air density variations between the two microphones also causes the pointing accuracy to decrease with range. Even filtered microphones receive not only sounds from the threat but also every other sound that falls in the non-unique acoustic range of the threat.

Optical threat detection systems typically employ a visible or a cooled infrared camera to look at the visible or thermal flash from the discharge of the particular munition. The minimum frame rate required to detect such a threat should be in the 1000 frame per second range. However, this high frame rate requires that the focal plane be relatively small because of the nature of how the image electrons are clocked out. Consequently, focal plane arrays are limited to a small aperture and/or a narrow field of view (FOV). Another shortcoming of using focal plane arrays is that problem they receive not only the spectral information from the threat but also the spatial information as well. This is more information than necessary to make a threat determination.

It would be desirable to have a threat detection system with the low cost of an acoustic system, the accuracy and large FOV of a large imaging focal plane array system and the high bandwidth of a small FPA, while only collect that information necessary to make an accurate assessment of the location of the threat.

### SUMMARY

An aspect of the invention is a threat-detection system with a collection optical system having first and second channels (i.e., channel A and channel B), with respective narrow-band pass filters in a single or dual aperture configuration. Channel A is configured to pass at least one and preferably both of the potassium doublet lines of 769.90 nm and 766.49 nm, while channel B includes a guard band nominally centered at a guard band wavelength of λ_{B} = 790 nm. Light associated with channels A and B is imaged onto respective image intensifiers to form intensified first and second focus spots. The first and second intensified focus spots are then detected by respective one-dimensional or two-dimensional position-sensing photodiodes (PSDs). These PSDs have the advantage over conventional imaging sensors in that they have a large area and a fast response.

When channel A receives a signal and channel B does not, and when the channel A signal is temporally appropriate for a munitions source, the position voltage from the PSD of channel A is used to form a lookup table that correlates the PSD voltage with FOV position of the collection optical system. An indicator as to the source (threat) location in the FOV can be overlaid on a map, such as a GPS map or video map, that corresponds to the threat location in the sensor FOV. Multiple systems can provide updates to a single threat location map. An example threat indicator would be a light or icon representative of the nature of the threat.

When channel A and channel B receive comparable signals, the signal source would not be considered a threat because it would not have the proper spectral content indicative of a threat source but would more likely be a solar glint, bright light or other non-munitions-based light source. When channel A receives a much stronger signal than channel B but the temporal extent is much longer than a few hundred milliseconds, then the detected light source would not be considered a threat but would more likely be a source other than a discharged munition, such as wood fire, search light, munitions on fire, etc. Using a pair of PSDs allows the threat detection to have a relatively low false alarm rate as compared to conventional threat-detection techniques.

The use of image intensifiers to intensify the focus spots makes the threat-detection system more sensitive and can also reduce the cost and size of the threat-detection system.

Additional features and advantages of the invention are set forth in the detailed description that follows, and in part will be readily apparent to those skilled in the art from that description or recognized by practicing the invention as described herein, including the detailed description that follows, the claims, as well as the appended drawings.

It is to be understood that both the foregoing general description and the following detailed description present embodiments of the invention are intended to provide an overview or framework for understanding the nature and character of the invention as it is claimed. The accompanying drawings are included to provide a further understanding of the invention, and are incorporated into and constitute a part of this specification. The drawings illustrate various embodiments of the invention, and together with the description serve to explain the principles and operations of the invention.

This invention improves over the inventor's previous design by configuring the system to have an image intensifier adjacent the position-sensing photodiode. Advantages of the improved configuration include: a higher signal-to-noise ratio (SNR) in the detection process; fast detection of flashes from munitions (e.g., 100 ns FWHM flash pulse width associated with small arms fire is detectable), high gain (e.g., 10⁵) for increased detection sensitivity; the ability to employ narrow-band filters to filter extraneous wavelengths of light because fewer photons are needed for detection process; the use of untwisted image intensifiers to keep the system compact; the use of relatively large PSDs, e.g., 45 mm x 45 mm, since image intensifiers can be as large as 50 mm, though smaller detectors and image intensifiers (e.g., 20 mm x 20 mm detector and corresponding image intensifier size) can also be used very effectively; the image intensifiers can be used over a wide field-of-view (e.g., > 40 °) so that system can have a wide field-of-view; and the image intensifier can be selected to be one that operates well at the wavelengths of interest, including wavelengths of about 766 nm.

### BRIEF DESCRIPTION OF THE DRAWINGS

FIG. 1 is a schematic diagram of a generalized embodiment of threat detection system of the present disclosure shown monitoring a section of terrain;

FIG. 2A is a more detailed view of the collection optical system shown in FIG.1, with single-aperture collection optics;

FIG. 2B is similar to FIG. 2A, except that the collection optical system includes dual-aperture collection optics;

FIGS. 2C and 2D are similar to FIGS. 2A and 2B and illustrate example embodiments of threat-detection systems having single-aperture and dual aperture collection optical systems, where the collection optical system in each case further includes image intensifiers respectively arranged immediately adjacent and upstream of the corresponding PSDs;

FIG. 3 is a face-on view of an example large-area PSD;

FIG. 4 is a more detailed schematic diagram of the electronics of the threat detection system of FIG. 1; and

FIG. 5 is similar to FIG. 4 and illustrates an example embodiment where the GPS unit and electronic compass are replaced by a video camera unit, and the processor unit includes a field-programmable gate array (FPGA).

### DETAILED DESCRIPTION

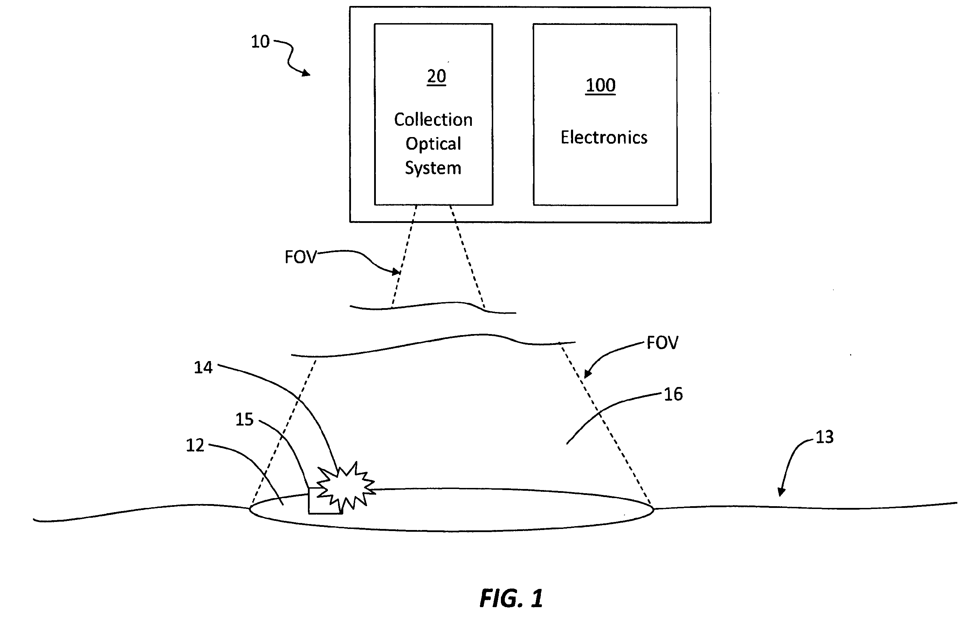

FIG. 1 is a schematic diagram of a generalized embodiment of threat detection system 10 according to the present disclosure. Threat detection system 10 includes a collection optical system 20 and processing electronics ("electronic") 100. Shown in FIG. 1 is the field of view FOV of collection optical system 20 and the corresponding terrain section 12 of terrain 13 as covered by the FOV. Within the field of view FOV is a "flash" 14 caused by the discharge of a potassium-based munition 15, which a threat source. Note that flash 14 need not be located on terrain section 12 *per* se, but can be anywhere in the space (volume) 16 covered by field of view and associated with the observation of the terrain section. The size of space 16 and the size of terrain section 12 depend on the field of view FOV and the distance of the collection optical system 20 to the ground, so that these sizes can vary widely and can cover a relatively large space associated with a battle field or other hostile environment. In various examples, threat detection system 10 is airborne or is ground-based. Further, multiple threat-detection systems 10 can be linked for redundancy and to obtain a more accurate threat assessment of the territory being monitored.

### Collection optical system

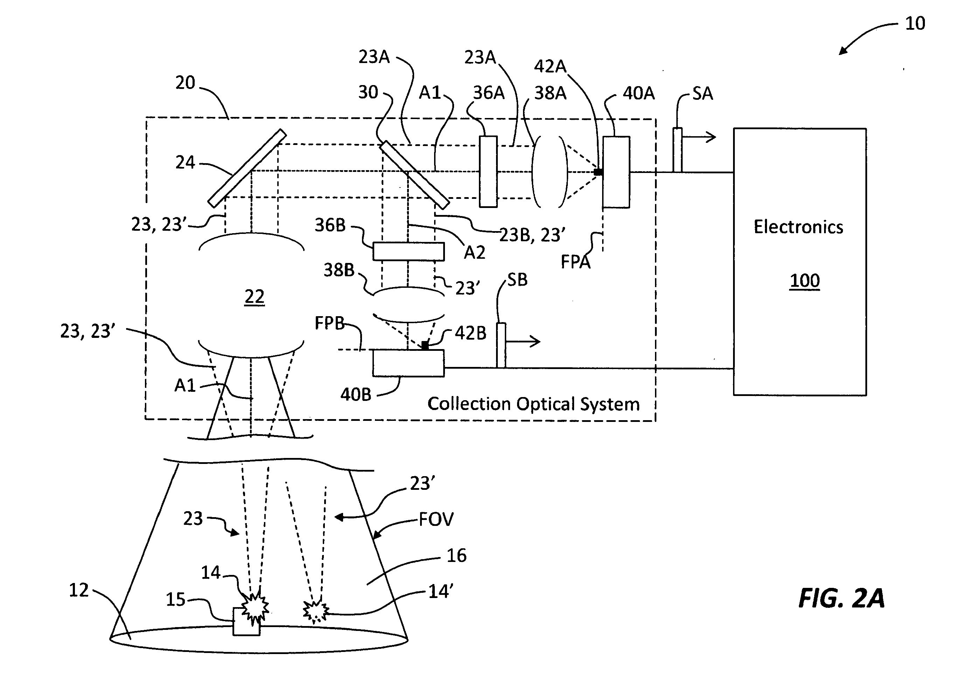

FIG. 2A is a more detailed view of the collection optical system 20 of threat detection system 10 as shown in FIG.1. Collection optical system 20 includes along an optical axis A1, collection optics 22, a fold mirror 24, and a beamsplitter 30. The example collection optical system 20 as shown in FIG. 2A is a single-aperture system that includes a beamsplitter 30 that defines a second optical axis A2 at an angle (e.g., a right angle) to axis A1. Collection optical system 20 further includes along axis A1 a narrow-band filter 36A that passes light in the wavelength band Δλ_{A}, a focusing lens 38A, and position-sensing photodiode PSD 40A. Likewise, collection optical system 20 further includes along axis A2 a narrow-band filter 36B that passes light in a wavelength band Δλ_{B}, a focusing lens 38B, and a PSD 40B. An example bandwidth for wavelength bands Δλ_{A} and Δλ_{B} is about 10 nm. In an example, PSDs 40A and 40B are large-area PSDs.

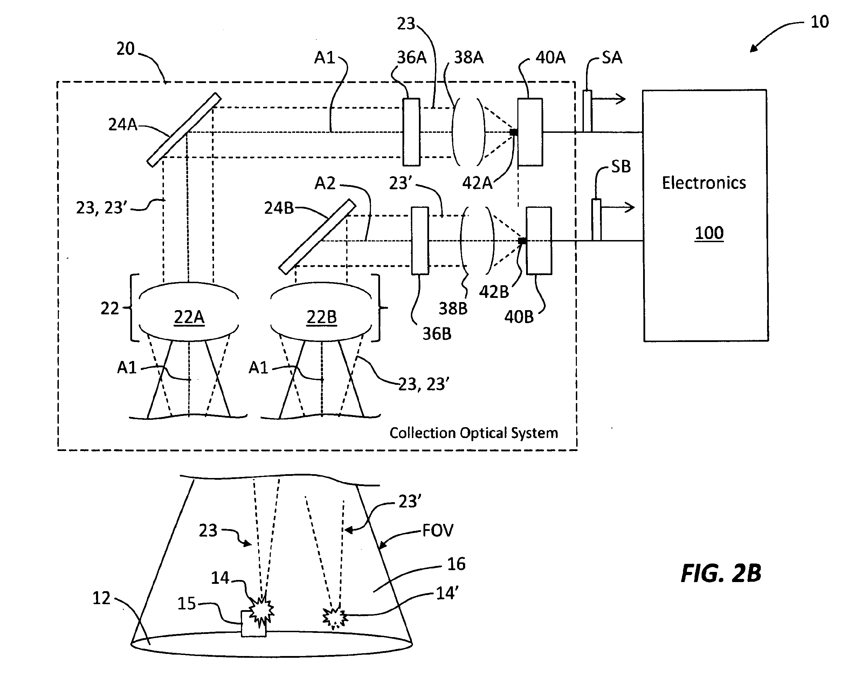

FIG. 2B is similar to FIG. 2A and illustrates an example embodiment of collection optical system 20, wherein the collection optical system is a dual-aperture system having two collection optics 22A and 22B. In the dual-aperture configuration of FIG. 2B, each collection optics 22A and 22B has its own axis A1 and A2 so that beamsplitter 30 is eliminated. Collection optics 22A and 22B are sighted so that they image the same terrain section 12.

The portion of collection optical system 20 and the portion of electronics 100 (discussed below) associated with axis A1 and wavelength band Δλ_{A} is referred to herein as "channel A," while the portion of collection optical system 20 and the portion of electronics 100 associated with axis A1 and axis A2 (in the single-aperture embodiment) and wavelength band Δλ_{B} is referred to herein as "channel B." The optical portion of optical channel A is referred to as "optical path A," while the optical portion of optical channel B is referred to as "optical path B." Note that, unlike the single aperture embodiment of FIG. 2A, in the dual aperture embodiment of FIG. 2B, channels A and B do not share a portion of optical axis A1.

Wavelength band Δλ_{A} includes at least one of the well-known potassium doublet lines 769.896 nm and 766.490 nm associated with light from flash 14 as emitted by the discharge of potassium-based munitions. In an example embodiment, wavelength band Δλ_{A} includes both potassium doublet lines 769.896 nm and 766.490 nm. Wavelength band Δλ_{B} is a guard band centered at a wavelength some distance away from the potassium doublet lines. An example wavelength band Δλ_{B} includes a wavelength with a high atmospheric transmission but that is not associated with potassium-based discharges. An example center wavelength λ_{B} for wavelength band Δλ_{B} is λ_{B} = 790 nm.

Collection optics 22 and focusing lenses 36A and 36B are configured to form respective focus spots 42A and 42B at PSDs 40A and 40B, which are located at respective focus planes FPA and FPB.

### Collection optical system with image intensifiers

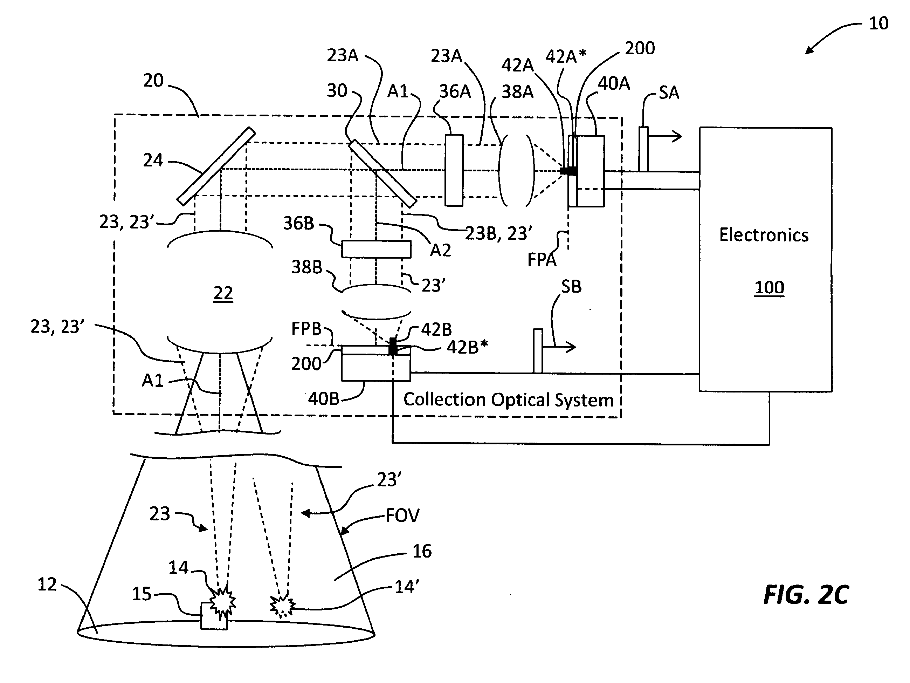

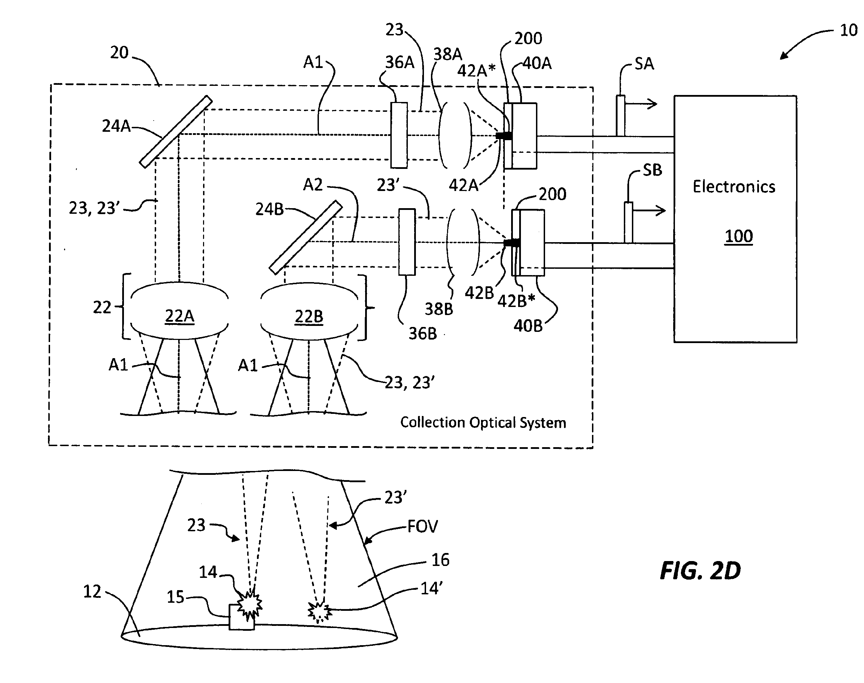

FIGS. 2C and 2D are similar to FIG. 2A and 2B respectively, and illustrate an example embodiment wherein the collection optical system 20 in each embodiment includes one or more image intensifiers 200. In an example, image intensifiers 200 are respectively arranged immediately adjacent and upstream of PSDs 40A and 40B. In the example threat- detection systems 10 shown in FIGS. 2C and 2D, two image intensifiers 200 are respectively arranged adjacent and upstream of PSDs 40A and 40B. However, in an example alternative configuration, only one image intensifier 200 may be employed adjacent and upstream of either of PSDs 40A or 40B.

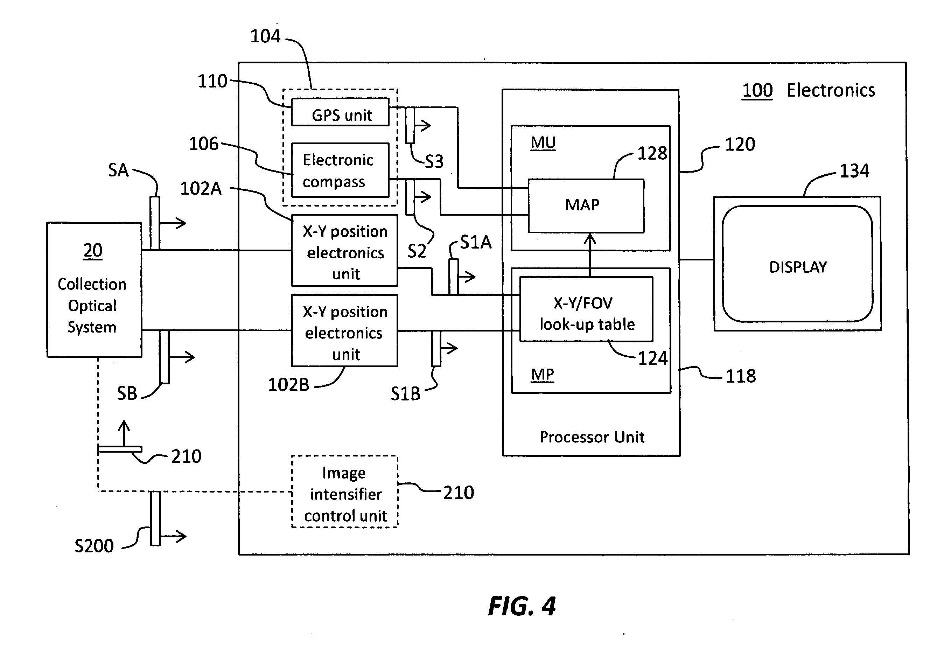

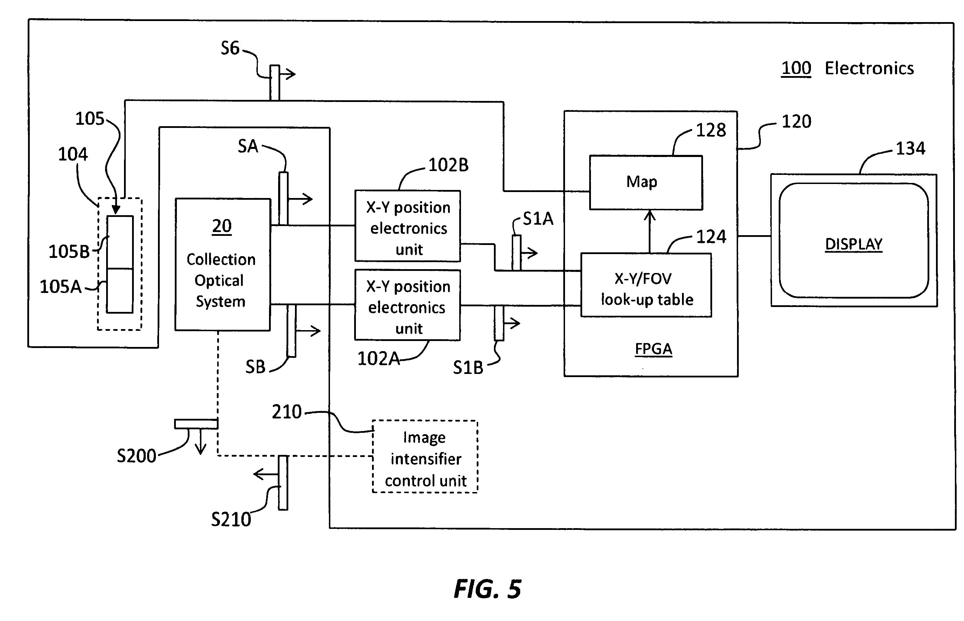

The one or more image intensifiers 200 are electrically connected to electronics 100, which is configured to control the operation of the one or more image intensifiers. In an example embodiment, electronics 100 includes an image intensifier control unit 210 (see FIG. 4 and FIG. 5) configured to control the operation of the one or more image intensifiers 200. In an example, image intensifier control unit 210 is configured to provide automatic gain control to the one or more image intensifiers 200. Electronics 100 may also be configured to provide electrical power to the one or more image intensifiers 100, e.g., from a battery pack or power supply (not shown) and through image intensifier control unit 210. Image intensifier 210 is shown in phantom to indicate that it is optional and corresponds to the embodiment of collection optical system 20 that employs one or more image intensifiers 200.

The embodiments of threat-detection system 10 where collection optical system 20 includes one or more image intensifiers 200 have a number of advantages over the same system that does not employ image intensifiers. For example, the one or more image intensifiers 200 serve to increase the sensitivity of collection optical system 20 by intensifying light that passes through the corresponding narrow-band filter 36, i.e., light 23 that passes through narrow-band filter 36A and light 23' that passes through narrow-band filter 36B. In particular, focus spots 42A and 42B are focused onto their respective image intensifiers 200, which in response thereto form corresponding intensified focus spots 42A* and 42B* that are then detected by the corresponding PSDs 40A and 40B, which are located immediately adjacent and downstream from the image intensifiers.

In an example, the one or more image intensifiers 200 each have a sufficiently fast response time so that a flash 14 having about a 100 ns FWHM pulse width (e.g., the type of flash associated with small arms fire) is detectable. Also in an example, the one or more image intensifiers 200 each have a gain as high as 10⁵ for increased sensitivity. The increased sensitivity of the embodiments of threat detection system 10 illustrated in FIG. 2C and 2D provide a higher SNR, which allows for a flash 14 caused by gun fire to be more readily detected.

The use of one or more image intensifiers 200 also allows for the use of a less expensive (i.e., lower transmission) narrow-band filters 36 because the amount of light that passes through the filter is amplified. In fact, the amount of light that actually passes through narrow-band filter 36 can be extremely low while still allowing for threat-detection system 10 to function. Of course, the use of high-quality narrow-band filters 36 in combination with image intensifiers 200 provides a high level of performance for threat-detection system 10.

In an example, the one or more image intensifiers 200 are the untwisted type, which are compact. Example commercially available image intensifiers 200 come in sizes of up to 50 mm in diameter and so can be used with large-area PSDs having dimensions of 45 mm x 45 mm. Example commercially available image intensifiers 200 also come in a 18 mm diameter size, which is less costly than the 50 mm diameter versions and can be used with a 20 mm x 20 mm PSD. Image intensifiers 200 generally are operable over a relatively wide FOV and so can be used in a collection optical system 20 that has a relative wide FOV (e.g., > 40 degrees). Example commercially available image intensifiers 200 operate in the 766 nm region of the spectrum.

Further, if narrow-band filter 36 has a sufficiently narrow bandpass, then threat-detection system 10 may not need the aforementioned automatic gain control.

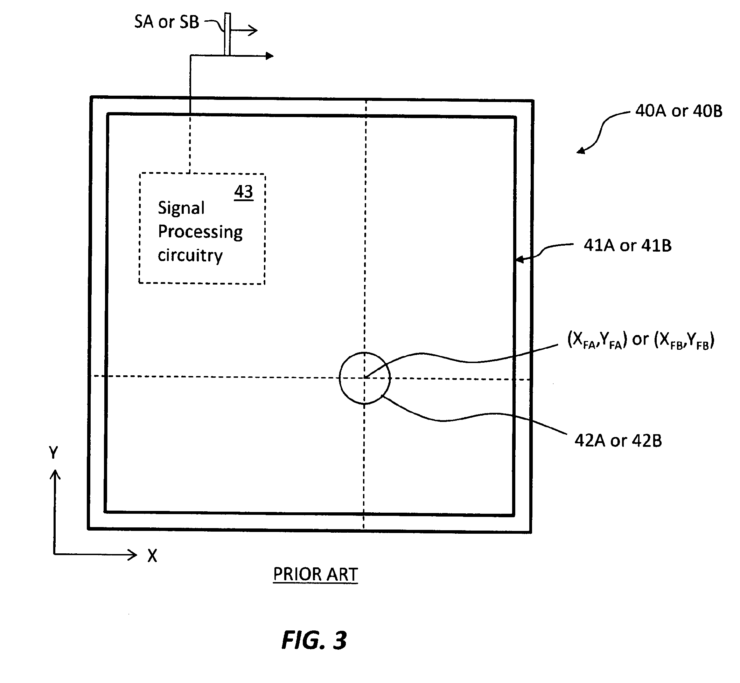

FIG. 3 is a face-on view of an example prior art large-area PSD 40A or 40B. The PSD 40A or 40B has a photosensitive surface 41A or 41 B. In an example, PSDs 40A and 40B are silicon-based photosensors that in an example include processing circuitry 43 configured with pre-amplifiers and sum/difference circuits to provide an X-Y voltage signal (signals SA and SB, respectively) representative of the X-Y locations of the centroid of the average light intensity of respective focus spot 42A and 42B (or intensified focus spots 42A* and 42B*) formed on respective photosensor surfaces 41A and 41 B (the discussion below refers to focus spots 42A and 42B by way of example). In an example, X-Y voltage signals SA and SB respectively comprise voltage signals SVXA, SVYA and SVXB and SVYB corresponding to the (x,y) output from the respective PSDs.

For PSDs 40A and 40B, focus spots 42A and 42B (or 42A* and 42B*) have respective X-Y positions (X_{FA}, Y_{FA}) and (X_{FB}, Y_{FB}), which in an example correspond to the centroid of the detected light. PSDs 40A and 40B have a relatively large bandwidth of over 100 kHz, which is advantageous in detecting short flashes of light such as flash 14.

An example PSD for use in system 10 is available from SiTek Electro Optics, Partille, Sweden as "SiTek SPC-PSD (duolateral dual axis)." Example LAPSDs have dimensions ranging from 4 mm x 4 mm to 45 mm x 45 mm. Linear PSDs can be up to 72 mm long.

In an example, collection optics 22 is or includes a telescope that provides collimated light 23 to focusing lenses 38A and 38B. Also in an example, collection optics 22 has a field size that corresponds to the dimensions of the PSDs 40A and 40B.

In the operation of collection optical system 20 of FIG. 2A, light 23 from flash 14 from potassium-based munition 15 is discharged within the field of view FOV is captured by collection optics 22 and relayed along optical axis A1 to beamsplitter 30. Beamsplitter 30 splits light 23 so that a portion 23A (e.g., half) of light 23 travels along optical axis A1 while the remaining portion 23B (e.g. the other half) of light 23 travels along optical axis A2. Light portion 23A passes through filter 36A, which passes only light within the narrow wavelength band Δλ_{A}. This filtered light 23A is focused onto PSD 40A by lens 38A, forming a focus spot 42A thereon. In the embodiment where image intensifier 200 is used, focus spot 42A is formed on the image intensifier, which forms intensified focus spot 42A*. The X-Y location of the particular focus spot 42A (or 42A*) on the PSD 40A corresponds to the location of flash 14 in the field of view FOV. PSD 40A generates electrical signal SA representative of the centroid of the energy of focus spot 42A (or 42A*) incident on LASPD 40A. This energy centroid is designated (X_{FA}, Y_{FA}).

Likewise, light portion 23B is incident upon filter 36B, which only passes light within the narrow wavelength band Δλ_{B}. Since light portion 23B is from a potassium-based munition, this light will not make it through filter 36B and so no focus spot 42B will be formed. However, if light 23' from another light source 14' that happens to emit light with wavelength band Δλ_{B} and within the FOV, then this light will pass through filter 36B and be focused as a focus spot 42B. In the example where image intensifier 200 is used, focus spot 42B is converted to an intensified focus spot 42B*. PSD 40B generates electrical signal SB representative of the centroid of the energy of focus spot 42B (or 42B*) at PSD 40B. This energy centroid is designated (X_{FB}, Y_{FB}).

Thus, when a potassium-based munition is fired, channel A receives a strong light signal while channel B will not receive any light signal. This indicates a high probability of a threat being detected in the optical system FOV. If both channel A and optical channel B receive light signals of nearly the same intensity, then even if the signal is strong, the source of the signal is assumed to be spurious, e.g., a solar glint or from a non-threat light emitter.

### Processing Electronics

FIG. 4 is a more detailed schematic diagram of the electronics 100 of the threat detection system 10 of FIG. 1. Electronics 100 includes X-Y position electronics units 102A and 102B respectively electrically connected to PSDs 40A and 40B. Note that PSDs 40A and 40B are shown as included in collection optical system 20 for convenience, but can alternatively be included in X-Y position electronics units 102A and 102B, respectively. X-Y position electronics units102A and 102B are configured to respectively receive detector electronic signals SA and SB from respective PSDs 40A and 40B, calculate an X-Y position on each PSD and generate respective electronic signals S1A and S1 B representative of the respective X-Y spot positions (X_{FA}, Y_{FA}) and (X_{FB}, Y_{FB}). In an example embodiment, X-Y position electronics units 102A and 102B are configured to calculate the centroids of the average light intensity of focus spots 42A and 42B (or intensified focus spots 42A* and 42B*) in determining the X-Y spot positions (X_{FA}, Y_{FA}) and (X_{FB}, Y_{FB}). In an example embodiment, position electronics units 102A and 102B are incorporated into the respective PSDs in the aforementioned signal processing circuitry 43 therein (see FIG. 3).

As discussed above, in an example, electronics 100 includes image intensifier control unit 210 for embodiments of threat-detection system 10 that include one or more image intensifiers 200. In an example, the one or more image intensifiers 200 communicate with image intensifier control unit 210 via image intensifier signals S200 from the one or more image intensifiers and control signals S210 from the image intensifier control unit.

Electronics 100 also include an orientation unit 104 configured to generate provide orientation information for threat detection system 10. The orientation information is embodied in an electrical signal S6. In an example, orientation unit 104 includes an electronic compass 106 and a global positioning system electronics unit ("GPS unit") 110. Electronic compass 106 is configured to calculate a compass heading for a pointing direction corresponding to the direction in which collection optical system 22 is pointing. Electronic compass 106 generates an electrical compass signal S2 representative of the pointing direction of threat detection system 10. This pointing direction is referred to hereinbelow as the "system pointing direction." GPS unit 110 generates a GPS signal S3 representative of the GPS coordinates of ground portion 12 within the FOV, i.e., the GPS unit provides a GPS map of the terrain section 12 under surveillance based on a set of received GPS coordinates, as well as any map information stored in the GPS unit.

Electronics 100 also includes a processor unit 120 that includes, for example, a microprocessor MP and a memory unit MU, or a field-programmable gate array (FPGA) (see FIG. 5). Processor unit 120 is electrically connected to X-Y position electronics units 102A and 102B, to electronic compass 106, and to GPS unit 110. Processor unit 120 is configured to store and process information from these components. In particular, processor unit 120 includes an X-Y/FOV look-up table 124 created from the X-Y position data embodied in electronic signals S1A from X-Y position electronics units102A.

Microprocessor MP of processor unit 120 is configured to perform a comparison of the X-Y positions from signals S1A and S1B of X-Y position electronics 102A and 102B and determine whether the X-Y position (X_{FA}, Y_{FA}) corresponds to an actual detected threat or if the detected light is from a source other than a legitimate threat (i.e., other than a munitions-based discharge). Note that the look-up table is based only on the X-Y positions (X_{FA}, Y_{FA}) associated with channel A since only channel A includes information about an actual threat.

If signal S1A is received but not signal S1B, and if signal S1A is a short pulse (e.g., on the order of milliseconds), then detected flash 14 can be considered a threat. If signals S1A and S1B are comparable, the conclusion is that the light represents a non-threat because it came from a non-munitions flash (such as flash 14'), regardless of their temporal characteristics. An example non-munitions flashes is a solar glint, searchlight, or other bright light source.

In addition, processor unit 120 is configured to perform a temporal comparison of the formation of focus spots 42A (or intensified focus spots 42A*) as measured by their timing t_{A} to ensure that the detected focus spots are from an actual threat. In one example, processor unit 120 measures the timing t_{A} to a timing threshold t e.g., t_{A} < T milliseconds. This measurement of signals SA from respective channels A serves to minimize the false alarm rate (FAR).

For each X-Y position determined to be a threat, a corresponding field of view (FOV) location is calculated and stored in the X-Y/FOV position look-up table. Processor unit 120 also includes a map 128 formed, for example, from GPS information from GPS signal S3 and electronic compass information from electronic compass signal S2. Map 128 alternatively includes a video image, as discussed below in connection with FIG. 5. Thus the orientation information from orientation unit 104 is embodied in signals S2 and S3.

Electronics 100 further includes a display 134 electrically connected to processor unit 120 for displaying threat information as described below.

When threat detection system 10 is arranged at a known altitude over ground area 12, the X-Y position information from PSD 40A as stored in the X-Y position look-up table 124 is combined with the system pointing direction and the GPS map to indicate the location of a threat (flash) 14 as superimposed on the GPS map of the terrain section 12. For a ground-based system, the location of flash 14 on PSD 40A corresponds to a location in the system FOV, which translates to a known direction from which the threat came.

Display 134 can be used, for example, to show the location of threat detection system 10 on the map, and also show coordinate lines that indicate the location of flash 14 on terrain section 12. When two or more of threat systems 10 are combined (e.g., networked together), the exact location of flash 14 can be determined by triangulation and displayed on each display 134.

In one example of a ground-based threat detection system 10, two-dimensional PSDs 40 are replaced by one-dimensional PSDs 40. This is because for a ground-based threat detection system, the vertical extent is limited and one-dimensional PSDs can be made larger (longer) than two-dimensional PSDs.

FIG. 5 is similar to FIG. 4 and illustrates an example embodiment of threat detection system 10 wherein GPS unit 110 and electronic compass 106 of orientation unit 104 are replaced by a video camera unit 105 having a video camera lens 105A and video electronics 105B that generates orientation information as embodied in a video signal S6. Video camera lens 105A is configured so that it views at least the terrain section 12 that is being monitored by collection optical system 20.

The threat position is then overlaid on top of a "video image" map in map 128 instead of overlaid on a GPS-based map. This approach works best for small FOVs, e.g., up to about 20°. Also, threat detection system 10 of FIG. 5 has as processor unit 120 in the form of (or that includes) an FPGA.

A major advantage of this technique for processing threat detection is the compactness, portability and field robustness of the approach. Threats can be identified with a pair of lenses, pair of PSD's, pair of PSD amplifiers, 6 A/D converters (one for the X output, out for the Y output and one for the "Sum" output for getting intensity) for each PSD), and a computer with data acquisition software. The simplicity of the processing also allows the entire unit to be very compact and the large detection areas available for the PSDs allow a reasonable F/# lens system for each one to be designed with a large FOV. This further enables the compactness of a system that can cover a large FOV.

It will be apparent to those skilled in the art that various modifications and variations can be made to the present invention without departing from the spirit and scope of the invention. Thus, it is intended that the present invention cover the modifications and variations of this invention provided they come within the scope of the appended claims and their equivalents.
The invention comprises aspects which are disclosed in the sentences below, which are part of the description, but not claims in accordance with J15/88 of the Boards of Appeal

### Sentences:

1. A method of detecting a threat from a potassium-based munition in a section of monitored terrain, comprising:
   collecting first light originating from a flash from a potassium-based munition using a collection optical system having a field of view;
   intensifying the collected first light to form first intensified light;
   detecting on a first position-sensing photodiode (PSD) a first intensified light spot formed from the first intensified light and converting the detected first intensified light spot into a first electrical signal;
   monitoring with a second PSD second light that does not come from the potassium-based munition and that is collected by the collection optical system, and providing a second electrical signal from the second PSD;
   comparing the first and second electrical signals to determine whether the detected first intensified light spot represents a threat from the potassium-based munition; and
   locating the threat within the field of view of the collection optical system.
2. The method of sentence 1, further comprising intensifying the second light and detecting the intensified second light with the second PSD when forming the second electrical signal.
3. The method of sentence 1, further comprising:
   providing a map of the monitored terrain section; and
   overlaying the threat location on the map.
4. The method of sentence 1, further comprising forming the map from at least one of global positioning system (GPS) information and a video image of the monitored terrain section.
5. The method of sentence 1, further comprising:
   processing the first electrical signal to determine an x-y position of the first detected light spot; and
   relating the x-y position to a corresponding position in the field of view.
6. The method of sentence 1, further comprising:
   processing the second electrical signal to determine an x-y position of a second detected light spot; and
   assessing whether a threat exists by determining how close in space and time the first light spot is relative to the second light spot.
7. The method of sentence 10, further comprising providing the first and second PSD as two-dimensional PSDs.
8. A threat detection system that detects light from a flash from a potassium-based munition within a monitored section of terrain, comprising:
   a collection optical system having a field of view and that collects and focuses first and second light having respective first and second wavelength bands Δλ_{A} and Δλ_{B}, wherein the first wavelength band Δλ_{A} includes at least one of wavelengths 769.9 nm and 766.49 nm and the second wavelength band Δλ_{B} does not include the wavelengths 769.9 nm and 766.49 nm;
   first and second image intensifiers respectively disposed to received the focused first and second light to form respective first and second intensified focus spots;
   a first position-sensing photodiode (PSD) arranged adjacent and downstream of the first image intensifier to receive and detect the first intensified focus spot and generate a corresponding first position signal;
   a second PSD arranged adjacent and downstream of the second image intensifier to receive and detect the second intensified focus spot and generate a second position signal if a detectable amount of second light is within the field of view;
   a first position electronics unit configured to receive the first position signal and calculate a first position of the first intensified focus spot on the first PSD; and
   a processor unit configured to relate the first position to a corresponding position in the field of view and to compare the first and second X-Y position signals to ascertain whether the first position signal corresponds to a threat.
9. The system of sentence 8, further including an orientation unit configured to provide to the processor orientation information corresponding to the monitored terrain section, and wherein the processor is configured to locate the flash relative to the orientation information.
10. The system of sentence 9, wherein the orientation information includes at least one of a) a global position system (GPS) map of the monitored terrain section and b) a video image of the monitored terrain section.
11. The system of sentence 9, wherein the orientation unit includes:
   a global positioning system (GPS) that generates GPS electrical signals representative of a map with GPS coordinates;
   an electronic compass that generates an electrical compass signal representative of a system pointing direction; and
   wherein the orientation information includes a GPS map.
12. The system of sentence 9, wherein the orientation unit is operably connected to the collection optical system and includes a video camera unit, and wherein the orientation information includes a video signal representative of a video image of the monitored terrain section.
13. The system of sentence 8, wherein the first and second PSDs are large-area two-dimension PSDs and the first and second position signals are X-Y position signals.
14. The system of sentence 8, wherein the first and second PSDs are one-dimensional.
15. The system of sentence 8, wherein the first wavelength band Δλ_{A} includes both potassium doublet lines of wavelengths 769.9 nm and 766.49 nm.
16. The system of sentence 15, wherein the second wavelength band Δλ_{B} has a wavelength λ_{B} = 790 nm.
17. The system of sentence 8, wherein the collection optical system includes single-aperture collection optics.
18. The system of sentence 8, wherein the collection optical system includes dual-aperture collection optics.
19. The system of sentence 8, wherein the processor unit includes a field-programmable gate array (FPGA).
20. The system of sentence 8, wherein the processor unit includes a microprocessor.

## Claims

1. A method of detecting a threat from a potassium-based munition in a section of monitored terrain, comprising:
collecting first light originating from a flash from a potassium-based munition using a collection optical system having a field of view;
intensifying the collected first light to form first intensified light;
detecting on a first position-sensing photodiode (PSD) a first intensified light spot formed from the first intensified light and converting the detected first intensified light spot into a first electrical signal;
monitoring with a second PSD second light that does not come from the potassium-based munition and that is collected by the collection optical system, and providing a second electrical signal from the second PSD;
comparing the first and second electrical signals to determine whether the detected first intensified light spot represents a threat from the potassium-based munition; and
locating the threat within the field of view of the collection optical system.

2. The method of claim 1, further comprising intensifying the second light and detecting the intensified second light with the second PSD when forming the second electrical signal.

3. The method of at least one of the claims 1 or 2, further comprising:
providing a map of the monitored terrain section; and
overlaying the threat location on the map.

4. The method of at least one of the claims 1 to 3, further comprising forming the map from at least one of global positioning system (GPS) information and a video image of the monitored terrain section.

5. The method of at least one of the claims 1 to 4, further comprising:
processing the first electrical signal to determine an x-y position of the first detected light spot; and
relating the x-y position to a corresponding position in the field of view.

6. The method of at least one of the claims 1 to 5, further comprising:
processing the second electrical signal to determine an x-y position of a second detected light spot; and
assessing whether a threat exists by determining how close in space and time the first light spot is relative to the second light spot.

7. The method of at least one of the claims 1 to 6, further comprising providing the first and second PSD as two-dimensional PSDs.

8. A threat detection system that detects light from a flash from a potassium-based munition within a monitored section of terrain, comprising:
a collection optical system having a field of view and that collects and focuses first and second light having respective first and second wavelength bands Δλ_{A} and Δλ_{B}, wherein the first wavelength band Δλ_{A} includes at least one of wavelengths 769.9 nm and 766.49 nm, especially both potassium doublet lines of wavelengths 769.9 nm and 766.49 nm
and the second wavelength band Δλ_{B} does not include the wavelengths 769.9 nm and 766.49 nm, especially the second wavelength band Δλ_{B} has a wavelength λ_{B} = 790 nm
first and second image intensifiers respectively disposed to received the focused first and second light to form respective first and second intensified focus spots;
a first position-sensing photodiode (PSD) arranged adjacent and downstream of the first image intensifier to receive and detect the first intensified focus spot and generate a corresponding first position signal;
a second PSD arranged adjacent and downstream of the second image intensifier to receive and detect the second intensified focus spot and generate a second position signal if a detectable amount of second light is within the field of view;
a first position electronics unit configured to receive the first position signal and calculate a first position of the first intensified focus spot on the first PSD; and
a processor unit, especially including of a field programmable gate array (FPGA) or a microprocessor configured to relate the first position to a corresponding position in the field of view and to compare the first and second X-Y position signals to ascertain whether the first position signal corresponds to a threat.

9. The system of claim 8, further including an orientation unit configured to provide to the processor orientation information corresponding to the monitored terrain section, and wherein the processor is configured to locate the flash relative to the orientation information.

10. The system of claim 9, wherein the orientation information includes at least one of a) a global position system (GPS) map of the monitored terrain section and b) a video image of the monitored terrain section.

11. The system of at least one of the claims 9 to 10, wherein the orientation unit includes:
a global positioning system (GPS) that generates GPS electrical signals representative of a map with GPS coordinates;
an electronic compass that generates an electrical compass signal representative of a system pointing direction; and
wherein the orientation information includes a GPS map.

12. The system of at least one of the claims 9 to 11, wherein the orientation unit is operably connected to the collection optical system and includes a video camera unit, and wherein the orientation information includes a video signal representative of a video image of the monitored terrain section.

13. The system of at least one of the claims 8 to 12, wherein the first and second PSDs are large-area two-dimension PSDs and the first and second position signals are X-Y position signals or wherein the first and second PSDs are one-dimensional.

14. The system of at least one of the claims 8 to 13, wherein the collection optical system includes single-aperure collection optics.

15. The system of at least one of the claims 8 to 13, wherein the collection optical system includes dual-aperture collection optics.
